# EUROPÄISCHE PATENTSCHRIFT

(11) **EP 1 953 401 B1**
(45) Veröffentlichungstag und Bekanntmachung des Hinweises auf die Patenterteilung: **01.02.2012**
(21) Anmeldenummer: 08154766.3
(22) Anmeldetag: 30.10.2002
(51) Int. Cl.: F16C 33/41, F16C 29/06

(54) **Führungswagen für Profilschienenführungen**
Guiding wagon for profile rail guides
Wagon de tête pour guides de rails profilés

(30) Priorität: 05.11.2001 DE 10153831
(43) Veröffentlichungstag der Anmeldung: 06.08.2008
(62) Teilanmeldung aus: 02024156.8
(73) Patentinhaber: Schaeffler Technologies GmbH & Co. KG, 91074 Herzogenaurach (DE)
(72) Erfinder: Greiner, Heinz, 73061, Ebersbach (DE)

(56) Entgegenhaltungen:
- EP-A- 0 845 611
- JP-A- 5 126 149
- US-A- 3 805 932

## Beschreibung

Die Erfindung betrifft eine Profilschienenführung. Eine solche bekannte Führung zeigt die Druckschrift EP 0 351 499 B1, siehe Oberbegriff des Anspruchs 1 der vorliegenden Erfindung.

Weitere bekannte Ausführungen, wie z. B. in der Druckschrift EP 0 845 611 A1 beschrieben, weisen bei Führungswagen, welche Umlaufführungen mit Ketten bilden, die Merkmale eines kantenlosen Umlaufes ihres jeweiligen Wälzkörper-Umlaufsystems auf, erlauben jedoch durch das gewählte Fertigungsverfahren des Ausspritzens nicht, geschlossene Ketten zu verwenden.

Eine Hauptaufgabe der Kette, das Ausrichten und Hereinziehen der Wälzkörper aus dem Rücklauf in die Tragzone, kann bei nicht geschlossenen Ketten nur unvollständig gelöst werden. Die Wälzkörper werden, je nach Stellung der Trennstelle, nicht gezogen sondern geschoben.

Das wirkt sich nachteilig aus, besonders bei vertikalem Einbau durch erhöhte Reibung, da die Kette die Wälzkörper nicht im Kanal ausrichtet. Außerdem werden die Umlenkteile durch erhöhte Fliehkräfte beansprucht. Die Ausspritzlösung ist zudem sehr werkzeugintensiv und damit teuer. Bei Ausspritzlösungen muß in Bewegungsachsrichtung ausgespritzt werden, um konstante Kanalquerschnitte zu erreichen. Dabei ist es nur möglich, die Innenseiten des Umlaufs vollständig auszubilden. Die äußeren Umlenkteile, die bei vollkugeligen Systemen und bei nicht geschlossenen Ketten die Umlenkung und die Ein-und Ausleitung der Wälzkörper übernehmen müssen, müssen dabei angefügt werden, so daß immer eine Trennung vorhanden ist.

Aus der Druckschrift DE 100 05 719 A1 ist es bekannt, Tragkörper so zu gestalten, daß sie minimale Bauhöhen aufweisen und es möglich ist, Laufbahnen und Führungskonturen gemeinsam und damit mit höchst präziser Zuordnung zueinander zu schleifen. Ebenso ist bekannt, daß die Führung der Wälzkörper dadurch an einem Teil erfolgen kann. Dieses begrenzt durch im Querschnitt nach außen verengte Kanäle die Wälzkörper in beiden Ebenen und hält sie somit exakt in der Umlaufbahn und Ebene der Traglaufbahnen. Das führt zu einem nahezu ungestörten Einlaufverhalten.

Eine solche Lösung ist grundsätzlich geeignet, vollkugelige Führungen zu gestalten, ebenso Führungen mit Distanzhaltern oder Führungen mit zwei Einzelkäfigen, die getrennt umlaufen, wobei die Verbindungsstege der Distanzhalter ober- und unterhalb der Laufbahnebenen liegen.

Da zwischen den Laufbahnen aus Festigkeits- und Steifigkeitsgründen des Wagens ein Abstand benötigt wird, ist es allerdings sinnvoll, den Verbindungssteg der Trennstücke einer Kette zwischen die Laufbahnen zu legen, damit der Bauraum optimal ausgenutzt wird.

In der japanischen Offenlegungsschrift Nr. 5-126 149 ist ein Käfig gezeigt, der die aus handelsüblichen Pendelkugellagern bekannte Form hat. Er ist allerdings elastisch um die Zentralachse. Ein solcher zweireihiger Käfig ist unverlierbar zwischen den Kugelreihen angeordnet und kann als geschlossener Käfig in die ebenfalls geschlossene Umlaufbahn eines aus Einzelführungsteilen gebauten Umlaufkanals eingebaut werden.

Das Bild in obiger japanischer Patentanmeldung zeigt nicht, daß die Kette geschlossen ist und hat auch keinen die Wälzkörper allseitig umschließenden Kanal, ebenso wenig eine erkennbare präzise Zuordnung des Kanals zu den Laufbahnen.

Einen kantenlosen und somit störungsfreien Umlauf ermöglicht die EP 0 470 357 A1.

### Zusammenfassung der Erfindung

Die Aufgabe der Erfindung besteht darin, einen Distanzhalter zu schaffen, der in seiner Länge variabel ist und bei dem sich benachbarte Kugelreihen gegenseitig stabilisieren.

Zur Lösung der Aufgabe wird eine Profilschienenführung nach Anspruch 1 vorgeschlagen.

### Beschreibung der Zeichnung

Ausführungsbeispiele der Erfindung sind der Zeichnung dargestellt und werden im Folgenden näher beschrieben.

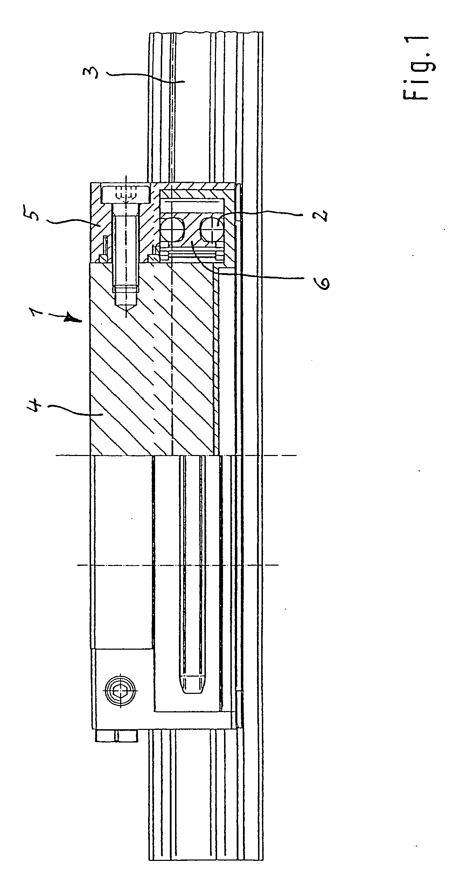

Figur 1 zeigt einen Führungswagen 1, teilweise in der Seitenansicht und teilweise im Längsschnitt, der über umlaufende Wälzkörper 2 an einer Führungsschiene 3 abgestützt und längs dieser verfahrbar ist. Er besteht aus einem Tragkörper 4, an dessen beiden in die Bewegungsrichtungen weisenden Stirnseiten Umlenkkörper 5 angeordnet sind. Diese enthalten als Einzelteile eines Umlaufsystems Teile eines Käfigs 6, in welchem an jeder Längsseite der Führungsschiene 3 zwei übereinander angeordnete Umlaufreihen von Wälzkörpern geführt sind. In Figur 1 ist zwar die Befestigung eines Umlenkkörpers 5 an dem Tragkörper 4 mit einer Schraube dargestellt, diese kann jedoch entfallen, da die Befestigung formschlüssig bzw. durch Schweißen oder Kleben erfolgt.

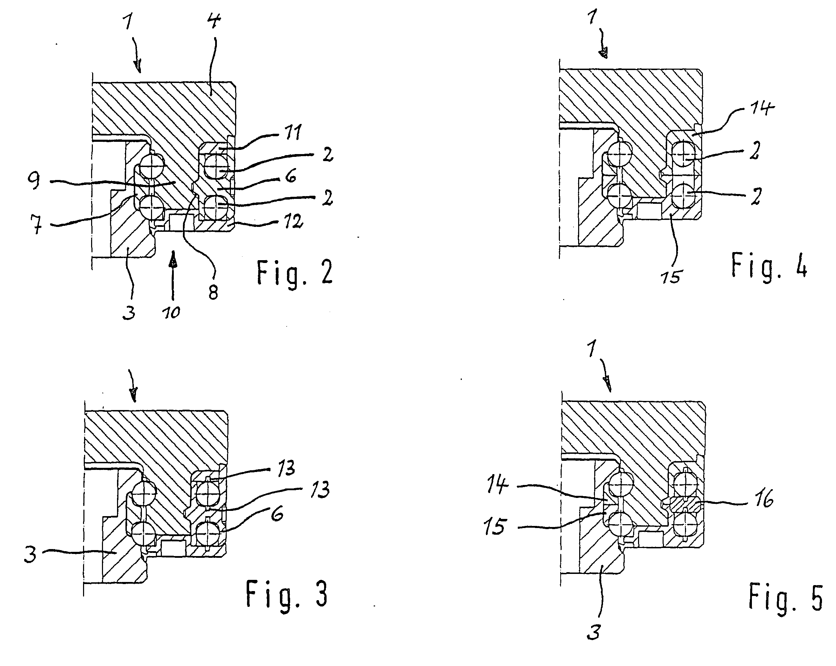

Figur 2 zeigt, dass bei dem im Querschnitt teilweise dargestellten Führungswagen 1 das Mittelteil des Käfigs 6 durch zwei getrennte, nach oben bzw. nach unten verengte Laufbahnquerschnitte gebildet wird, die durch eine durchgängige Wand getrennt sind. Der Käfig 6 besteht aus einem Stück, an welchem sowohl ein Wälzkörperrückhaltesteg 7 zur Führungsschiene hin, als auch die Rücklaufkanäle ausgebildet sind und welches über eine Zentrierfläche 8 positioniert ist und einen Tragkörperschenkel 9 vollständig umschließt, so dass bei der Montage der Käfig 6 von unten in geradliniger Bewegung in Richtung des Pfeiles 10 auf den Tragkörperschenkel 9 aufgeschoben werden kann. Im Falle einer einstückigen Ausbildung des Käfigs 6, wie sie hier in Figur 2 dargestellt ist, wird im Rücklaufkanal die unmittelbare Berührung der Wälzkörper 2 mit dem Tragkörper 4 des Führungswagens 1 durch eine Längsleiste 11 verhindert. Die untere Reihe der Wälzkörper 2 ist mit einem zusätzlichen Verschlußdeckel 12 verschlossen. Die Zentrierflächen 8 des Tragkörpers 4 können zusammen mit den Laufbahnen des Tragkörpers 4 für die Wälzkörper 2 geschliffen werden.

Figur 3 zeigt, dass bei dem Führungswagen 1 Nuten 13 für Kettenstege in die Laufbahnen des Mittelteils des Käfigs 6 und/oder der ansonsten ebenen oberen und unteren Begrenzungsteile eingebracht sind, die zur Aufnahme von Distanzhalterverbindungsstegen dienen.

Figur 4 zeigt, dass bei dem Führungswagen 1 die Umlaufbahnen des Käfigs aus zwei einander zugekehrten, im Schnitt C-förmigen Einzelschalen bestehen, nämlich einem oberen Käfigelement 14 und einem unteren Käfigelement 15. Diese leiten die als Kugeln ausgebildeten Wälzkörper 2 vollständig und allein. Ihre offenen Seiten liegen einander gegenüber und ihre Kanäle sind im Querschnitt an der offenen Seite verengt ausgeführt. Hier besteht der Käfig also aus zwei horizontal getrennten Bauteilen und ermöglicht damit die Verwendung einer endlosen Kette für jede Wälzkörperreihe.

Figur 5 zeigt, dass bei dem Führungswagen 1 zwischen den beiden Käfigelementen 14 und 15 zusätzlich eine Rückhalteplatte 16 angeordnet ist. Es können auch mehrere im wesentlichen ebene oder profilierte oder angeschrägte Rückhalteplatten angeordnet sein.

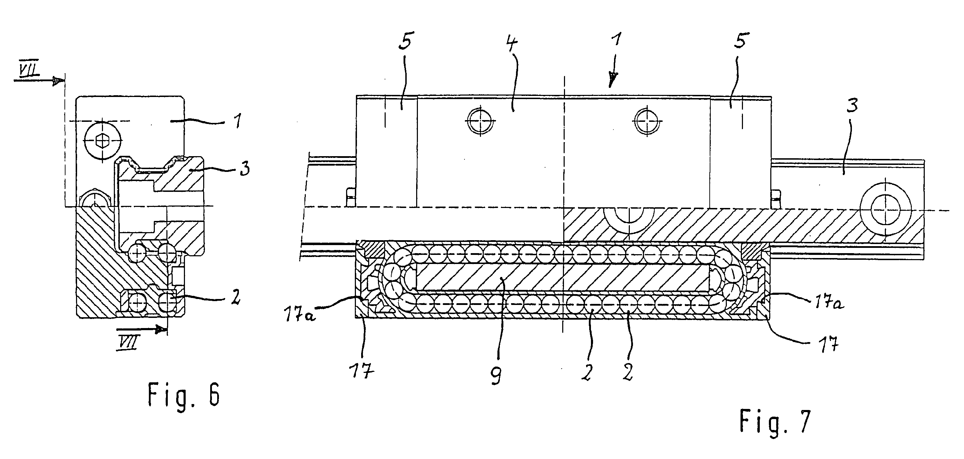

Figur 6 zeigt einen Führungswagen 1, der über in Umläufen angeordnete Wälzkörper 2 an einer Führungsschiene 3 abgestützt ist, teilweise im Querschnitt und teilweise in stirnseitiger Ansicht.

Figur 7 zeigt den Schnitt gemäß Linie VII-VII der Figur 6. Bei diesem Lager sind die Wälzkörper 2 ohne Distanzhalter in den Umläufen angeordnet. An jeder Stirnseite des Führungswagens 1 ist ein Kopfstück 17 über eine formschlüssige Verbindung 17a befestigt.

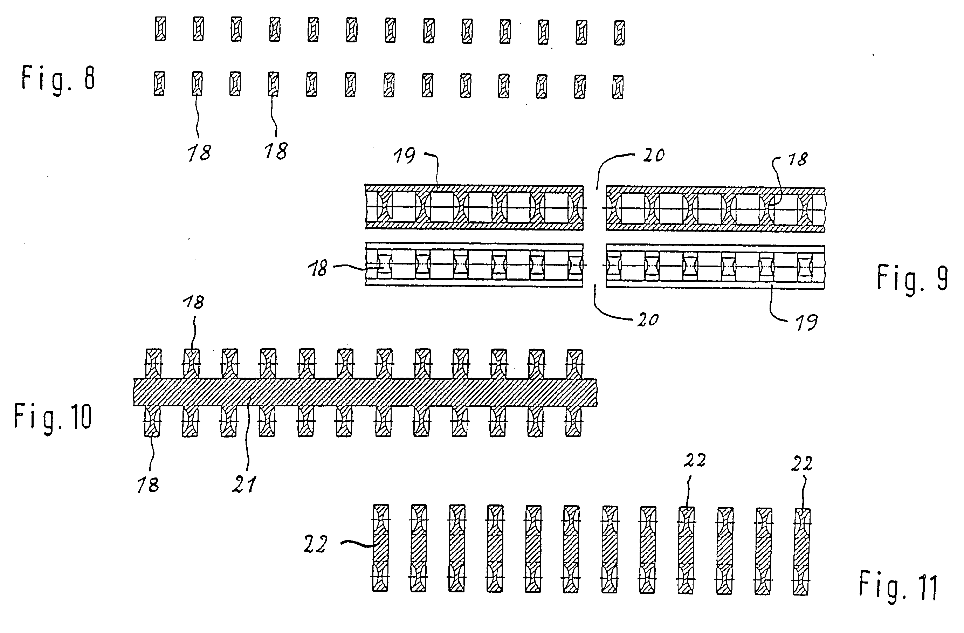

Figur 8 zeigt zwischen den Wälzkörpern 2 anzuordnende Distanzhalter 18 als Einzeldistanzstücke, und zwar so, wie sie in den geradlinigen Bereichen eines Wälzkörperumlaufs angeordnet werden.

Figur 9 zeigt eine Kette 19, die aus elastisch verbundenen Distanzhaltern 18 besteht, einmal im Längsschnitt und einmal in der Seitenansicht. Diese umlaufende Kette 19 ist nicht endlos, sondern sie weist zwei Enden an einer Trennstelle 20 auf. Die Distanzhalter 18 können aber auch in einer endlosen Kette ohne Trennstelle miteinander verbunden sein.

Figur 10 zeigt einen Abschnitt einer Kette 21, mit welcher Distanzhalter 18 für zwei parallele Wälzkörperreihen verbunden sind. Die Kette 21 ist für Kugeln als Wälzkörper ausgebildet. Mit einer solchen Doppelkammkette, die endlos ausgeführt sein kann, lassen sich also zwei Wälzkörperreihen gleichzeitig führen.

Figur 11 zeigt, ebenso wie Figur 8, als Einzeldistanzstücke angeordnete Distanzhalter 22, wobei jeweils ein Distanzhalter 22 Wälzkörper von zwei parallelen Wälzkörperreihen voneinander trennt. Hier sind in Einklang mit der vorliegenden Erfindung also einzelne "Doppelkammdistanzstücke" verwendet.

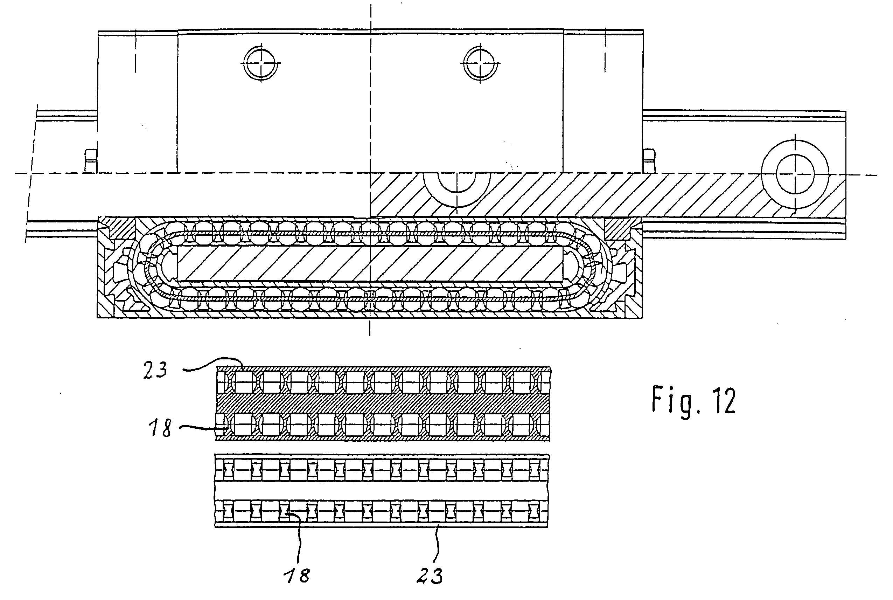

Figur 12 zeigt eine Anordnung, welche mit den Anordnungen nach den Figuren 9 und 10 vergleichbar ist, wobei die Kette 23 jeweils zwei durch elastische Stege verbundene Distanzhalter 18 für zwei parallele Wälzkörperreihen aufweist.

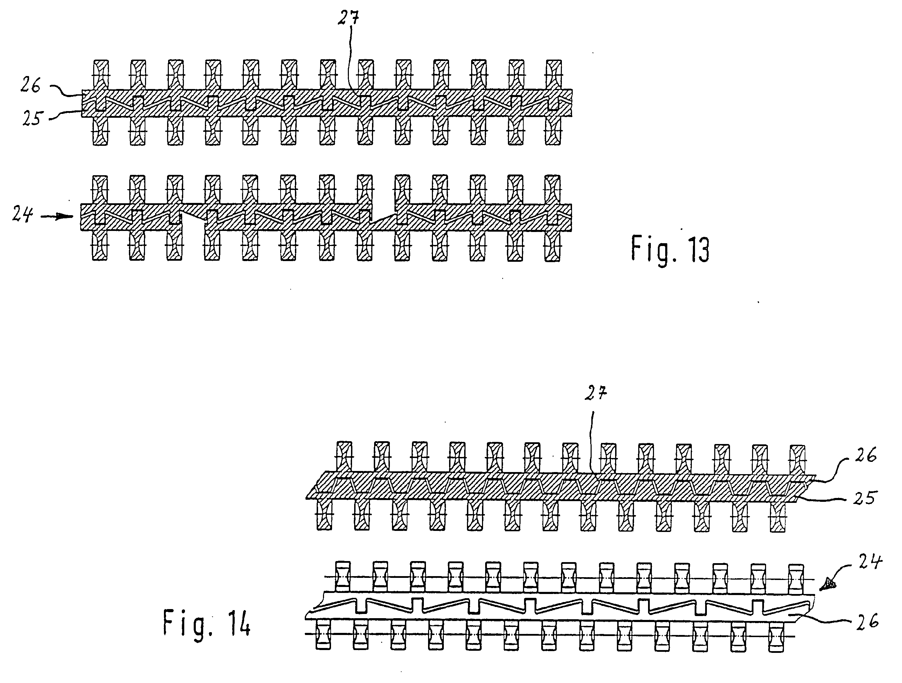

Die Figuren 13 und 14 zeigen jeweils, dass bei dem Führungssystem eine endlose Doppelkammkette 24 verwendet ist, die aus zwei horizontal getrennten Teilketten 25 und 26 besteht. Beide Teilketten sind durch eine formschlüssige Verbindung 27 aneinander befestigt.

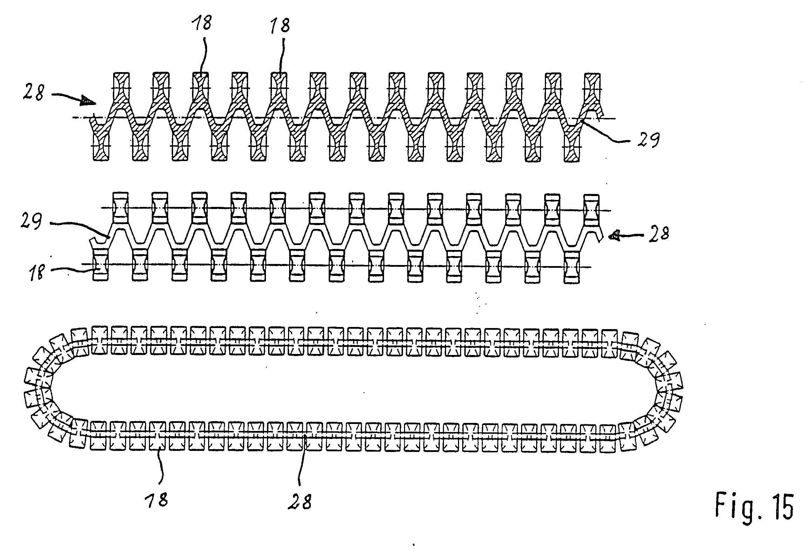

Figur 15 zeigt, ebenso wie Figur 14, dass in dem Führungswagen die Distanzhalter der einzelnen Umlaufverbände jeweils um eine halbe Teilung zueinander versetzt sind. Hier sind außerdem die Distanzhalter 18 der endlos ausgeführten Doppelkammkette 28 über elastische Federstege 29 miteinander verbunden, um Dehnungen aufnehmen zu können.

### Bezugszahlenliste

- 1: Führungswagen
- 2: Wälzkörper
- 3: Führungsschiene
- 4: Tragkörper
- 5: Umlenkkörper
- 6: Käfig
- 7: Wälzkörperrückhaltesteg
- 8: Zentrierfläche
- 9: Tragkörperschenkel
- 10: Pfeil, geradlinige Bewegung
- 11: Längsleiste
- 12: Verschlußdeckel
- 13: Nut
- 14: oberes Käfigelement
- 15: unteres Käfigelement
- 16: Rückhalteplatte
- 17: Kopfstück
- 17a: formschlüssige Verbindung
- 18: Distanzhalter
- 19: Kette
- 20: Trennstelle
- 21: Kette
- 22: Doppelkamm-Distanzhalter
- 23: Kette
- 24: Doppelkammkette
- 25: Teil kette
- 26: Teilkette
- 27: formschlüssige Verbindung
- 28: Doppelkammkette
- 29: Federsteg

## Patentansprüche

1. Profilschienenführung welche als Linearlager mit endlos umlaufenden Kugeln (2) ausgebildet ist, mit einem etwa u-förmig ausgebildeten, mit Umlenkkörpern (5) für die Kugeln (2) versehenen Führungswagen (1), der auf einer Führungsschiene (3) längsverschieblich gelagert ist, wobei der Führungswagen (1) die Führungsschiene (3) umgreift, wobei der Führungswagen (1) mit einem vierreihigen Kugelumlauf versehen ist, wobei jeder Kugelumlauf endlos ist, und wobei zu beiden Längsseiten der Führungsschiene (3) je zwei übereinander angeordnete Umlaufreihen von Kugeln vorgesehen sind und wobei aufeinander folgende Kugeln (2) durch Distanzhalter (22) getrennt sind **dadurch gekennzeichnet, dass** der Distanzhalter (22) in Form von Einzeldistanzstücken ausgebildet ist, wobei jedes Einzeldistanzstück zwischen zwei benachbarten Kugeln (2) der einen Kugelreihe als auch zwischen zwei benachbarten Kugeln der anderen Kugelreihe ein gemeinsames Einzeldistanzstück bildet.

2. Profilschienenführung nach Anspruch 1, bei der jedes Einzeldistanzstück an seinen beiden, den Kugeln (2) zugewandten Seiten mit je zwei Kugelsitzen für zwei Kugeln (2) beider Kugelreihen versehen ist.

## Claims

1. Profile rail guide designed as a linear bearing with endlessly circulating balls (2), having an approximately U-shaped guide carriage (1) which is provided with diverting bodies (5) for the balls (2) and which is mounted in a longitudinally movable manner on a guide rail (3), wherein the guide carriage (1) engages around the guide rail (3), wherein the guide carriage (1) is provided with a four-row ball circuit, wherein each ball circuit is endless, and wherein at both longitudinal sides of the guide rail (3) there are provided in each case two circulating rows of balls arranged one above the other, and wherein successive balls (2) are separated by spacers (22), **characterized in that** the spacers (22) are designed in the form of individual spacer pieces, wherein each individual spacer piece forms a common individual spacer piece between two adjacent balls (2) of one ball row and also between two adjacent balls of the other ball row.

2. Profile rail guide according to Claim 1, in which each individual spacer piece is provided, on its two sides facing towards the balls (2), with in each case two ball seats for two balls (2) of the two ball rows.

## Revendications

1. Guide pour rails profilés, qui est réalisé sous forme de palier linéaire avec des billes (2) circulant sans fin, comprenant un chariot de guidage (1) approximativement en forme de u, pourvu de corps déflecteurs (5) pour les billes (2), qui est monté de manière déplaçable longitudinalement sur un rail de guidage (3), le chariot de guidage (1) venant en prise autour du rail de guidage (3), le chariot de guidage (1) étant muni d'une circulation de billes à quatre rangées, chaque circulation de billes étant sans fin, et des deux côtés longitudinaux du rail de guidage (3) étant prévues à chaque fois deux rangées de circulation de billes disposées l'une au-dessus de l'autre, et des billes successives (2) étant séparées par des éléments d'espacement (22), **caractérisé en ce que** les éléments d'espacement (22) sont réalisés sous forme de pièces d'espacement individuelles, chaque pièce d'espacement individuelle formant entre deux billes adjacentes (2) d'une rangée de billes ainsi qu'entre deux billes adjacentes de l'autre rangée de billes une pièce d'espacement individuelle commune.

2. Guide pour rails profilés selon la revendication 1, dans lequel chaque pièce d'espacement individuelle est pourvue sur ses deux côtés tournés vers les billes (2) de deux sièges de billes respectifs pour deux billes (2) des deux rangées de billes.
